# EUROPEAN PATENT SPECIFICATION

(11) **EP 2 311 700 B1**
(45) Date of publication and mention of the grant of the patent: **21.08.2013**
(21) Application number: 09173235.4
(22) Date of filing: 16.10.2009
(51) Int. Cl.: B60T 8/26, B60T 8/32, B62L 3/08

(54) **Braking system for motorcycle**
Bremssystem für ein Motorrad
Système de freinage pour motocyclette

(43) Date of publication of application: 20.04.2011
(60) Divisional application: 13003378.0
(73) Proprietor: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. oHG, 60488 Frankfurt (DE)
(72) Inventor: Kajiwara, Kunio, Iwata-shi, Shizuoka 438-8501 (JP); Watanabe, Takahiro, Iwata-shi, Shizuoka 438-8501 (JP); Kusano, Taishi, Asahi-city, Chiba 289-2505 (JP); Uchida, Takanori, Yokohama-city, Kanagawa 221-0031 (JP); Kremer, Michael, 64846, Groß-Zimmern (DE); Meixner, Michael, 60320, Frankfurt am Main (DE)
(74) Representative: Grünecker, Kinkeldey, Stockmair & Schwanhäusser

(56) References cited:
- EP-A2- 1 277 635
- WO-A1-2007/128670
- WO-A1-2009/042276
- DE-A1- 2 921 626
- JP-A- 5 105 049
- US-A1- 2008 309 153

## Description

The present invention relates to a braking system for a motorcycle **according to the preamble of independent claim 1**.

**Such a braking system for a motorcycle can be taken from the prior art document** EP 1 277 635 A2**.**

In a motorcycle such as a motorcycle, it is regarded as being preferable that a front wheel brake operation member and a rear wheel brake operation member are simultaneously operated to equally generate braking forces for a front wheel and a rear wheel.

In recent years, to make the rider's braking operation easier, a braking system having a association mechanism is proposed. Here, the association mechanism is constituted such that when one of a front wheel braking force generating mechanism and a rear wheel braking force generating mechanism is operated, the association mechanism drives the other braking force generating mechanism. In a braking system having the association mechanism, if a rider operates the front wheel brake operation member or the rear wheel

brake operation member, braking forces are generated in both the front wheel braking force generating mechanism and the rear wheel braking force generating mechanism. Therefore, in the motorcycle having the braking system with the association mechanism, appropriate braking forces can be supplied to the motorcycle with a simple operation only.

The braking system with the association mechanism has a serious problem as to how a balance between a front wheel braking force generated in the front wheel braking force generating mechanism and a rear wheel braking force generated in the rear wheel braking force generating mechanism should be set. The braking system has also a problem as to how the total magnitude of the braking forces acting on the motorcycle should be set.

For example, the following WO 2004/022395 A1 discloses a braking system capable of preferebly distributing braking forces which are balance between the front wheel braking force and the rear wheel braking force both in a case where deceleration of the vehicle is small and in a case where the deceleration of the vehicle is great.

According to the braking system disclosed in WO 2004/022395 A1, when a reference deceleration which is analogous to the actual vehicle deceleration is smaller than a predetermined deceleration, the front wheel brake and the rear wheel brake are driven such that a fixed braking force distribution is achieved. When, on the other hand, the reference deceleration becomes greater than the predetermined deceleration, the front wheel brake and the rear wheel brake are driven such that braking force distribution suitable for the reference deceleration is achieved. Therefore, WO 2004/022395 A1 describes that suitable braking force distribution can be achieved not only when the reference deceleration is small, but also when the reference deceleration is great.

Further, WO 2004/022395 A1 points out that ideal braking force distribution is changed depending upon a carrying load. In view of this fact, WO 2004/022395 A1 discloses that the braking force distribution is changed in accordance with a carrying weight. More specifically, in the braking system disclosed in WO 2004/022395 A1, a lock state of the front wheel and the rear wheel is detected, thereby evaluating a carrying load state, and the braking force distribution is controlled in accordance with the lock state.

As described above, according to the braking system disclosed in WO 2004/022395 A1, a carrying load is determined in accordance with the lock state of the front wheel and the rear wheel, and the braking force distribution is controlled in accordance with the determined carrying load. For this reason, the carrying load cannot be determined unless the front wheel or the rear wheel is brought into the lock state. Thus, the braking force distribution suitable for the carrying load cannot be realized unless the front wheel or the rear wheel is brought into the lock state. Thus, according to the braking system disclosed in WO 2004/022395 A1, in a state where a braking force acting on the front wheel or the rear wheel is small and the front wheel or the rear wheel is not locked, the braking force distribution cannot be distribution suitable for the carrying load.

The motorcycle using the braking force disclosed in WO 2004/022395 A1 has a problem that a total magnitude of the braking forces acting on the motorcycle cannot be optimized in accordance with the carrying weight.

**I**t is an object of the invention to provide a braking system for a motorcycle **as indicted above** capable of supplying a braking force suitable for a carrying weight to a motorcycle also in a state where a front wheel and a rear wheel are not locked.

**According to the present invention said object is solved by a braking system for a motorcycle having the features of independent claim 1. Preferred embodiments are laid down in the dependent claims.**

A braking system for a motorcycle according to a preferred embodiment of the present invention includes a first hydraulic pressure supply mechanism, a first braking force generating mechanism, a first operation member, a second hydraulic pressure supply mechanism, a second braking force generating mechanism, a second operation member, a hydraulic pressure sensor, a association mechanism, a vehicle speed detection sensor and a control unit. The first hydraulic pressure supply mechanism supplies hydraulic pressure. The first braking force generating mechanism is supplied with

hydraulic pressure from the first hydraulic pressure supply mechanism, thereby generating a braking force. The first operation member is for operating the first braking force generating mechanism. The second hydraulic pressure supply mechanism supplies hydraulic pressure. The second braking force generating mechanism is supplied with hydraulic pressure from the second hydraulic pressure supply mechanism, thereby generating a braking force. The second operation member is for operating the second braking force generating mechanism. The hydraulic pressure sensor detects hydraulic pressure supplied to the second braking force generating mechanism. The association mechanism supplies hydraulic pressure to the first braking force generating mechanism when the second operation member is operated. The vehicle speed detection sensor detects a vehicle speed of the motorcycle. The control unit controls the association mechanism. The control unit calculates a vehicle deceleration from the vehicle speed detected by the vehicle speed sensor. When a magnitude of the vehicle deceleration with respect to hydraulic pressure supplied to the second braking force generating mechanism is smaller than a predetermined deceleration defined in a deceleration map, the control unit adjusts and controls hydraulic pressure such as to increase hydraulic pressure supplied to the first braking force generating mechanism.

It is preferable that the control unit repeatedly adjusts and controls hydraulic pressure. With this structure, a braking force of a magnitude suitable for a carrying weight can always be supplied to the motorcycle.

It is preferable that the control unit adjusts and controls hydraulic pressure to the extent that hydraulic pressure supplied to the first braking force generating mechanism does not exceed predetermined hydraulic pressure. With this structure, it is possible to restrain a braking force generated in the first braking force generating mechanism from excessively increasing with respect to a braking force generated in the second braking force generating mechanism. Therefore, even when the front wheel and the rear wheel are not locked, it is possible to supply a braking force of a magnitude suitable for a carrying weight to the motorcycle, and to optimize a braking force distribution between the first braking force generating mechanism and the second braking force generating mechanism.

More specifically, the braking system for a motorcycle further includes an operation amount detection section which detects an operation amount of the second operation member, the control unit includes a storing section which stores therein a first hydraulic pressure map that defines a relation between the operation amount of the second operation member and a reference hydraulic pressure supplied to the first braking force generating mechanism, and the control unit also includes a calculating section, which, when a magnitude of the vehicle deceleration with respect to hydraulic pressure supplied to the second braking force generating mechanism is equal to or greater than the predetermined deceleration, controls the association mechanism such that hydraulic pressure supplied to the first braking force generating mechanism by the association mechanism becomes equal to the reference hydraulic pressure which is calculated based on the first hydraulic pressure map and the operation amount of the second operation member detected by the operation amount detection section, and when the magnitude of the vehicle deceleration with respect to hydraulic pressure supplied to the second braking force generating mechanism is smaller than the predetermined deceleration, controls the association mechanism such that hydraulic pressure supplied to the first braking force generating mechanism by the association mechanism becomes higher than a current hydraulic pressure supplied to the first braking force generating mechanism by the association mechanism by a predetermined hydraulic pressure adjusting amount.

When the reference hydraulic pressure is calculated, the vehicle speed of the motorcycle may be taken into consideration.

More specifically, if a magnitude of the vehicle deceleration with respect to hydraulic pressure supplied to the second braking force generating mechanism becomes smaller than the predetermined deceleration during a time period in which the first braking force generating mechanism is controlled such that hydraulic pressure supplied to the first braking force generating mechanism by the association mechanism becomes equal to a reference hydraulic pressure calculated from the first hydraulic pressure map and from the operation amount of the second operation member detected by the operation amount detection section, the calculating section controls the association mechanism such that hydraulic pressure supplied to the first braking force generating mechanism by the association mechanism becomes equal to hydraulic pressure calculated from the vehicle speed of the motorcycle and from a second hydraulic pressure map in which the predetermined hydraulic pressure adjusting amount is added to the reference hydraulic pressure defined in the first hydraulic pressure map.

More specifically, when a magnitude of the vehicle deceleration with respect to hydraulic pressure supplied to the second braking force generating mechanism becomes smaller than the predetermined deceleration, the calculating section controls the association mechanism such that hydraulic pressure supplied to the first braking force generating mechanism by the association mechanism becomes equal to hydraulic pressure calculated from the vehicle speed of the motorcycle and from a new hydraulic pressure map in which the predetermined hydraulic pressure adjusting amount is added to a currently referred hydraulic pressure map.

It is preferable that the storing section stores therein an upper limit hydraulic pressure map that defines a relation between the operation amount of the second operation member and an upper limit hydraulic pressure supplied to the first braking force generating mechanism, and when hydraulic pressure defined in the new hydraulic pressure map is higher than hydraulic pressure defined in the upper limit hydraulic pressure map, the calculating section controls the association mechanism such that hydraulic pressure supplied to the first braking force generating mechanism by the association mechanism becomes equal to the upper limit hydraulic pressure calculated from the upper limit hydraulic pressure map from the operation amount of the second operation member detected by the operation amount detection section. With this structure, it is possible to restrain a braking force generated in the first braking force generating mechanism from excessively increasing with respect to the braking force generated in the second braking force generating mechanism. Therefore, even when the front wheel and the rear wheel are not locked, it is possible to supply a braking force of a magnitude suitable for a carrying weight to the motorcycle, and to optimize a braking force distribution between the first braking force generating mechanism and the second braking force generating mechanism.

After operation of the second operation member is released and then the second operation member is again operated, if a magnitude of the vehicle deceleration with respect to hydraulic pressure supplied to the second braking force generating mechanism becomes smaller than the predetermined deceleration , the control unit controls the association mechanism such that hydraulic pressure supplied to the first braking force generating mechanism by the association mechanism becomes equal to the reference hydraulic pressure calculated from the first hydraulic pressure map and from the operation amount of the second operation member detected by the operation amount detection section.

The braking system for the motorcycle may further include a first brake fluid passage which connects the first hydraulic pressure supply mechanism and the first braking force generating mechanism to each other. The association mechanism includes a first on-off valve which is disposed in the first brake fluid passage to open and close the first brake fluid passage, a association mechanism brake fluid passage which connects a portion of the first brake fluid passage closer to the first hydraulic pressure supply mechanism than the first on-off valve and a portion of the first brake fluid passage closer to the first braking force generating mechanism, **a** brake fluid pump which is disposed in the association mechanism brake fluid passage to send brake fluid from the first braking force generating mechanism toward the first hydraulic pressure supply mechanism, and a second on-off valve which is disposed in the association mechanism brake fluid passage to open and close the association mechanism brake fluid passage.

In this case, it is preferable that the control unit adjusts and controls hydraulic pressure by adjusting an opening of the second on-off valve. With this structure, as compared with a case where hydraulic pressure is adjusted and controlled by adjusting output of the brake fluid pump, it is possible to swiftly and precisely control hydraulic pressure supplied to the first braking force generating mechanism.

It is preferable that the first on-off valve is a so-called open-when-nonenergized type on-off valve which opens when electric power is not supplied and closes when electric power is supplied. It is preferable that the second on-off valve is a so-called closed-when-nonenergized type on-off valve which closes when electric power is not supplied and opens when electric power is supplied. With this structure, the first and the second on-off valves can be brought into non-conductive states when the association mechanism is not driven. Therefore, a consumption amount of electric power can be reduced.

The vehicle speed sensor includes a front wheel rotation speed sensor which detects a rotation speed of the front wheel of the motorcycle, and a rear wheel rotation speed sensor which detects a rotation speed of the rear wheel of the motorcycle.

The first braking force generating mechanism is provided to the rear wheel, and the second braking force generating mechanism is provided to the front wheel.

According to the braking system for a motorcycle, a carrying weight is determined based on a magnitude of a vehicle deceleration with respect to hydraulic pressure supplied to the second braking force generating mechanism, and a magnitude of hydraulic pressure supplied to the first braking force generating mechanism by the association mechanism is controlled based on the determination result. Therefore, it is possible to determine the carrying weight even when the front wheel or the rear wheel of the motorcycle is not locked, and a braking force of the motorcycle suitable for the carrying weight can be obtained.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing adjustment and control of hydraulic pressure;
Fig. 9 is a flowchart showing adjustment and control of hydraulic pressure;
Fig. 10 is a flowchart showing adjustment and control of hydraulic pressure;
Fig. 11 shows an example of a first hydraulic pressure map;
Fig. 12 shows an example of a deceleration map;
Fig. 13 shows an example of a second hydraulic pressure map, wherein a solid line indicates the second hydraulic pressure map and a dotted broken line indicates a first hydraulic pressure map;
Fig. 14 shows an example of an upper limit hydraulic pressure map, wherein a solid line indicates the upper limit hydraulic pressure map and a dotted broken line indicates the first hydraulic pressure map.

### DESCRIPTION OF THE PREFERRED EMBODIMENT

One example of a preferred mode in which the present invention is implemented will be described. However, the invention is not limited to the embodiment below.

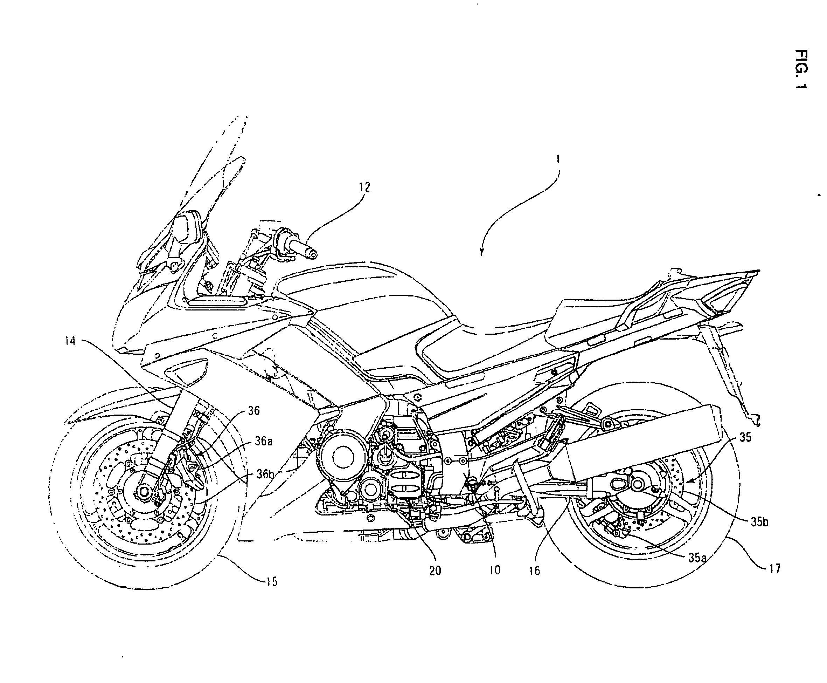

In the embodiment, one example of a preferred mode in which the present invention is implemented will be described based on a motorcycle 1 in a narrow sense shown in Fig. 1.

In the present invention, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in a narrow sense in addition to the motorcycle in the narrow sense. The motorcycle in the broad sense includes a vehicle having two or more front wheels and/or two or more rear wheels.

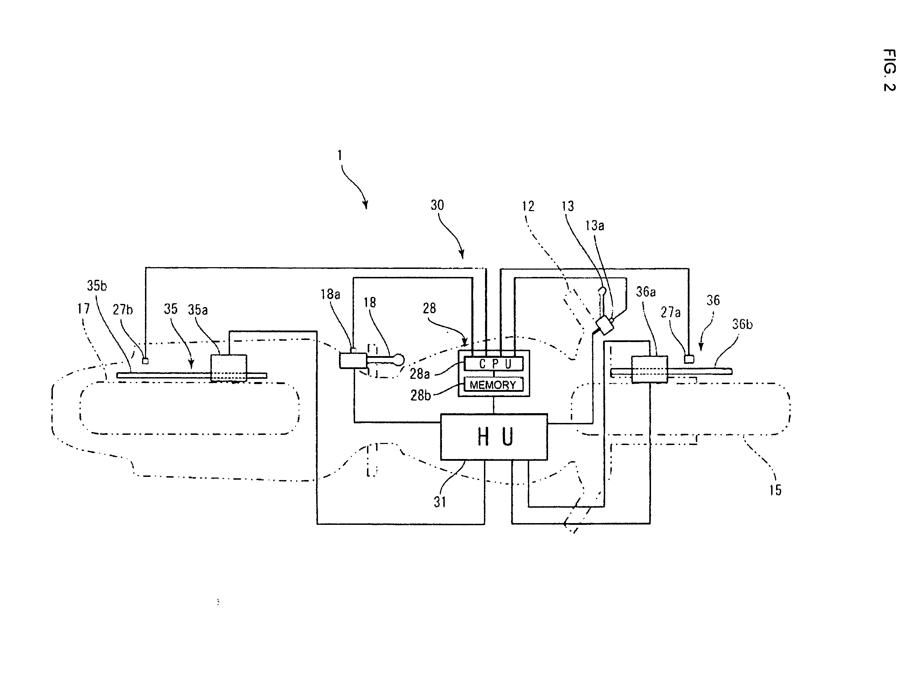

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in **a** HU (Hydraulic Unit) 31.

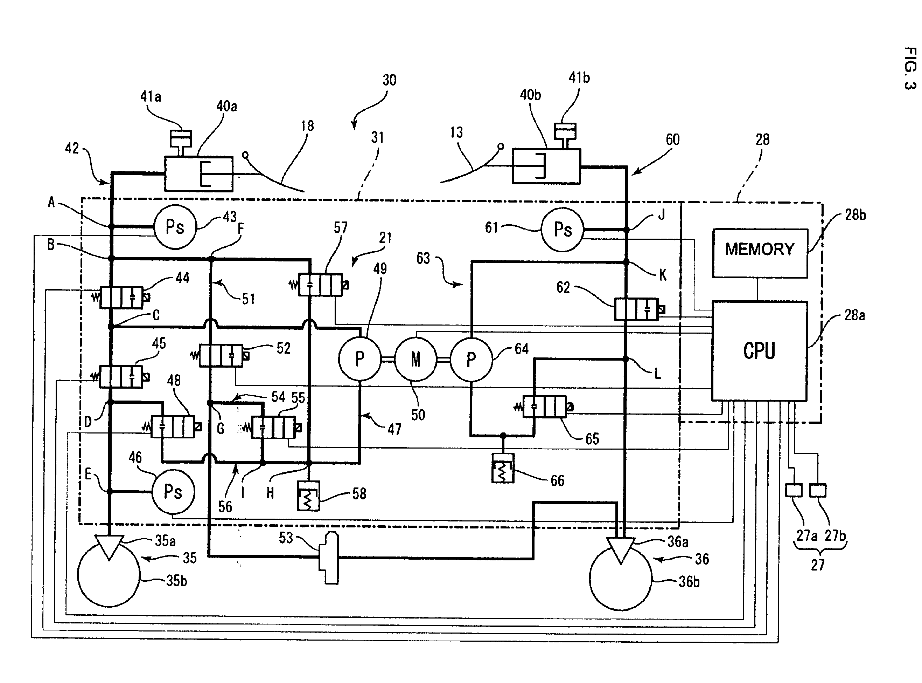

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 is connected to a point A of the first brake fluid passage 42. The second hydraulic pressure sensor 43 detects a hydraulic pressure at the point A of the first brake fluid passage 42.

A first on-off valve 44 and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied thereto, and which closes when electric power is supplied thereto. The third on-off valve 45 is disposed between the point C and a point D of the first brake fluid passage 42. The third on-off valve 45 is also an open-when-nonenergized type on-off valve like the first on-off valve 44.

In this embodiment, the first on-off valve 44, the third brake fluid passage 47 as the association mechanism brake fluid passage, the first brake fluid pump 49 and the second on-off valve 57 constitute the front association mechanism 21.

A third hydraulic pressure sensor 46 is connected to a point E of the first brake fluid passage 42. The third hydraulic pressure sensor 46 can measure hydraulic pressure more precisely than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

**A (first)** brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied thereto and which opens when electric power is supplied thereto.

Further, a buffer chamber 58 is connected to the point H of the third brake fluid passage 47.

The point F, which is located closer to the point B than the second on-off valve 57, is connected to the second caliper 36a through a fourth brake fluid passage 51. A fifth an-off valve 52 is disposed between the point F and a point G of the fourth brake fluid passage 51. The fifth on-off valve 52 is an open-when-nonenergized type on-off valve. A metering valve 53 is disposed between the point G of the fourth brake fluid passage 51 and the second caliper 36a.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. the operation amount of the brake lever 13 is detected also by the stroke sensor 13a. The detected operation amount of the brake lever 13 is output to the CPU 28a.

A first hydraulic pressure sensor 61 as an operation amount detection section is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

As described above, in this embodiment, the first hydraulic pressure sensor 61 detects both the hydraulic pressure in the second brake fluid passage 60 and the operation of the brake lever 13. Therefore, as compared with a case where a special-purpose sensor for detecting the operation of the brake lever 13 is provided, the number of parts can be reduced and the structure can be simplified.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27.

A method for calculating a vehicle speed from the front wheel rotation speed and the rear wheel rotation speed is not especially limited. For example, an average value of the front wheel rotation speed and the rear wheel rotation speed may be defined as the vehicle speed.

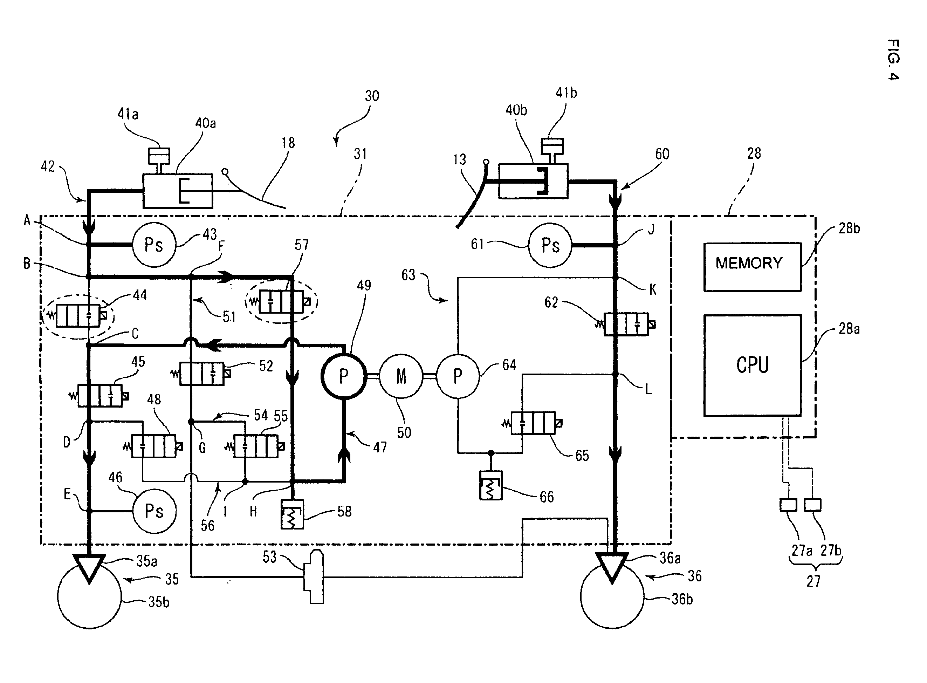

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

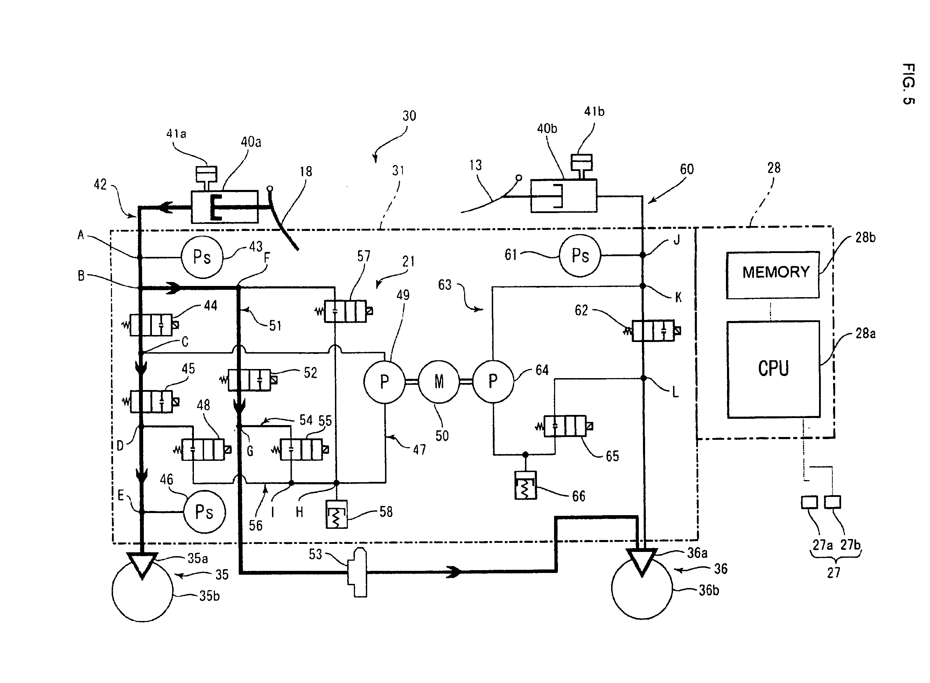

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

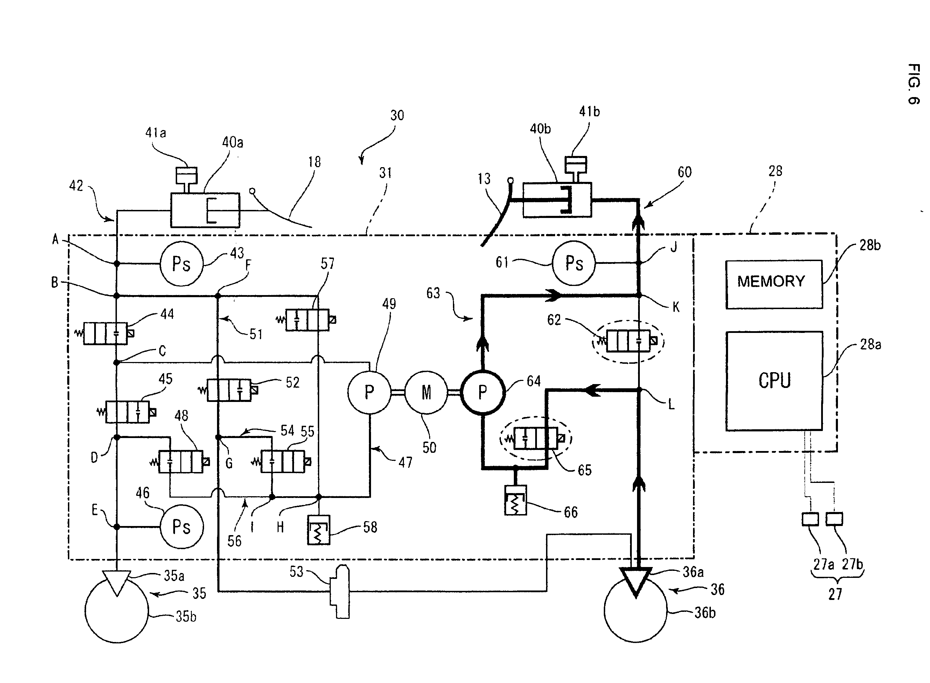

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

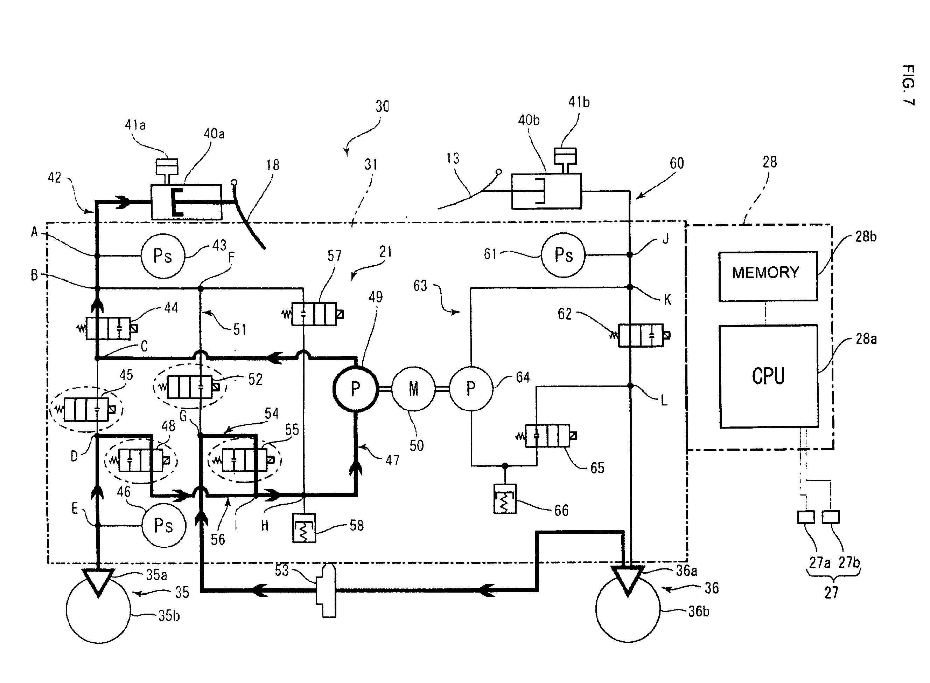

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, the brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

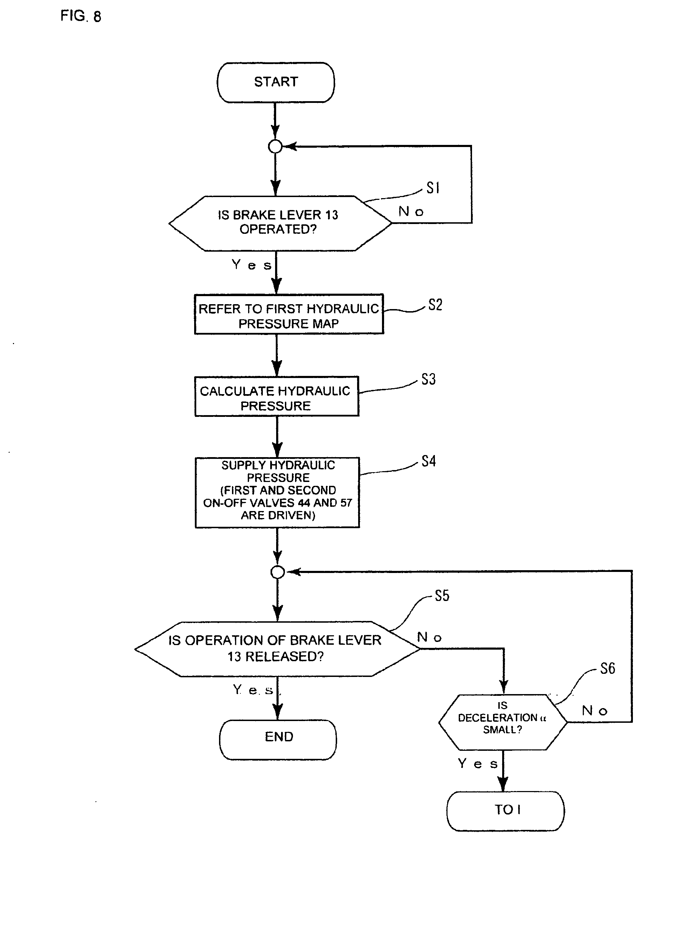

Next, detailed control during the front associationed operation in the braking system 30 will be described mainly with reference to Figs. 8 to 10.

According to this embodiment, a carrying amount is determined by a magnitude of the deceleration of the motorcycle 1 with respect to hydraulic pressure supplied to the second braking force generating mechanism 36. When the magnitude of the deceleration of the motorcycle 1 with respect to hydraulic pressure supplied to the second braking force generating mechanism 36 is smaller than a predetermined deceleration, it is determined that the carrying amount is great, and hydraulic pressure supplied to the first braking force generating mechanism 35 is increased. As a result, the braking force generated in the first braking force generating mechanism 35 is increased. Thus, a braking force suitable for the carrying amount acts on the motorcycle 1.

The adjustment and control of hydraulic pressure will be explained in detail with reference to Figs. 8 to 10. As shown in Fig. 8, it is determined in step S1 whether or not the brake lever 13 is operated by the ECU 28 shown in Fig. 3. More specifically, the ECU 28 determines whether or not hydraulic pressure detected by the first hydraulic pressure sensor 61 is higher than a predetermined hydraulic pressure. When hydraulic pressure detected by the first hydraulic pressure sensor 61 is less than the predetermined hydraulic pressure, the ECU 28 determines that the brake lever 13 is not operated. If hydraulic pressure detected by the first hydraulic pressure sensor 61 is equal to or higher than the predetermined hydraulic pressure, the ECU 28 determines that the brake lever 13 was operated.

When it is determined that the brake lever 13 is not operated, the procedure in step S1 is again executed. If it is determined that the brake lever 13 was operated, the procedure is advanced to steps S2 to S4. In steps S2 to S4, hydraulic pressure suitable for the operation amount of the brake lever 13 is supplied to the first braking force generating mechanism 35.

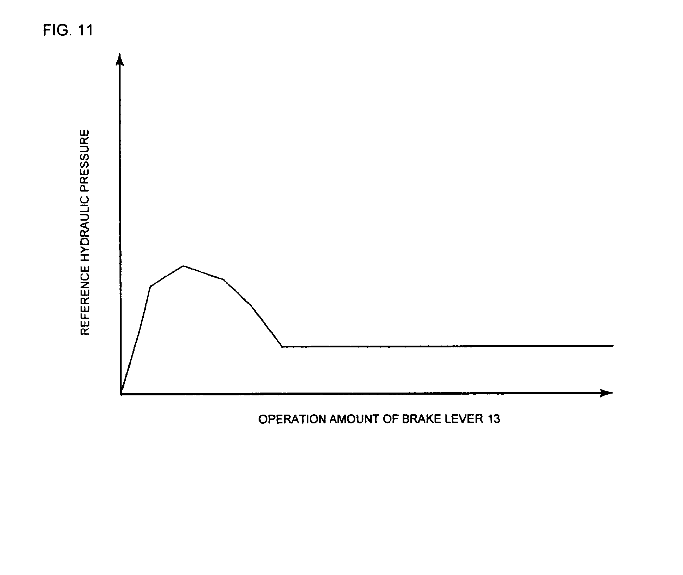

Specifically, in step S2, the **CPU** 28a of the ECU 28 refers to a first hydraulic pressure map stored in the memory 28b. Fig. 11 shows an example of the first hydraulic pressure map. As shown in Fig. 11, in the first hydraulic pressure map, a relation between an operation amount of the brake lever 13 as the second operation member and a reference hydraulic pressure supplied to the first braking force generating mechanism 35 is defined.

Next, in step S3, the **CPU** 28a calculates a reference hydraulic pressure supplied to the first braking force generating mechanism 35 by applying the operation amount of the brake lever 13 detected by the first hydraulic pressure sensor 61 as the operation amount detection section to the first hydraulic pressure map. Then in step S4, the first and the second on-off valves 44 and 57 are driven so that the reference hydraulic pressure is supplied to the first braking force generating mechanism 35. As a result, a braking force of a magnitude suitable for the current vehicle speed of the motorcycle 1 is generated in the first braking force generating mechanism 35.

After step S4, step S5 is executed. In step S5, it is determined whether or not the operation of the brake lever 13 is released. Specifically, it is determined whether or not hydraulic pressure detected by the first hydraulic pressure sensor 61 is equal to or higher than a predetermined hydraulic pressure. If hydraulic pressure detected by the first hydraulic pressure sensor 61 is less than the predetermined hydraulic pressure, the **CPU** 28a determines that the operation of the brake lever 13 is released. If, on the other hand, hydraulic pressure detected by the first hydraulic pressure sensor 61 is equal to or higher than the predetermined hydraulic pressure, the **CPU** 28a determines that the operation of the brake lever 13 is not released. The predetermined hydraulic pressure in step S5 and the predetermined hydraulic pressure in step S1 are usually different from each other in magnitude. However, the predetermined hydraulic pressure in step S5 and the predetermined hydraulic pressure in step S1 may be equal to each other.

If it is determined in step S5 that the operation of the brake lever 13 is not released, the procedure is advanced to the hydraulic pressure adjusting and control procedure in steps S6 to **S**16.

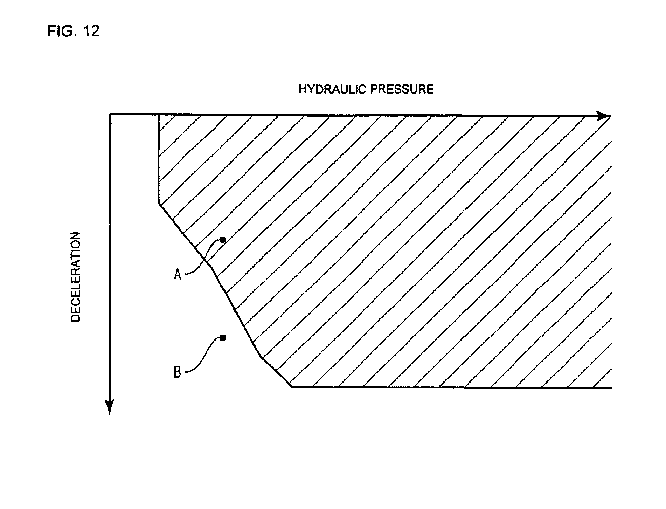

In step S6, a vehicle deceleration α is determined by the **CPU** 28a. That is, the **CPU** 28a determines whether or not the magnitude of the vehicle deceleration α with respect to hydraulic pressure supplied to the second braking force generating mechanism 36 is equal to or less than the predetermined deceleration. More specifically, a deceleration map shown in Fig. 12 is stored in the memory 28b. As shown in Fig. 12, a magnitude of the vehicle deceleration α with respect to hydraulic pressure supplied to the second braking force generating mechanism 36 is defined in the deceleration map. The **CPU** 28a first reads the deceleration map from the memory 28b. The **CPU** 28a plots a vehicle deceleration α obtained by differentiating a vehicle speed detected by the vehicle speed sensor 27 with respect to time and hydraulic pressure detected by the first hydraulic pressure sensor 61 in the deceleration map. As a result, when the plotted point is located closer to a low deceleration side than a predetermined deceleration map M, the **CPU** 28a determines that the vehicle deceleration α is smaller than a predetermined deceleration. That is, in Fig. 12, when the plotted

point is in a hatched region, the **CPU** 28a determines that the vehicle deceleration α is smaller than the predetermined deceleration. When the plotted point is located closer to the high deceleration side than the predetermined deceleration map M, the **CPU** 28a determines that the vehicle deceleration α is equal to or higher than the predetermined deceleration.

For example, when a point A shown in Fig. 12 is plotted, the **CPU** 28a determines that the vehicle deceleration α is smaller than the predetermined deceleration. If a point B shown in Fig. 12 is plotted, the **CPU** 28a determines that the vehicle deceleration α is equal to or higher than the predetermined deceleration.

The carrying weight of the motorcycle 1 is correlated with magnitude of a deceleration with respect to a braking force generated against the motorcycle 1. The braking force generated against the motorcycle 1 is correlated with hydraulic pressure supplied to the second braking force generating mechanism 36. Therefore, the carrying weight of the motorcycle 1 is correlated with a magnitude of the deceleration with respect to hydraulic pressure supplied to the second braking force generating mechanism 36 (the "deceleration against hydraulic pressure", hereinafter). More specifically, there is a tendency that when the carrying weight of the motorcycle 1 is small the deceleration against hydraulic pressure is increased. There is a tendency that, when the carrying weight of the motorcycle 1 is great, on the other hand the deceleration against hydraulic pressure is reduced.

According to this embodiment, in step S6, the carrying weight of the motorcycle 1 is detected utilizing this phenomenon. That is, in step S6, a case where it is determined that the vehicle deceleration α is equal to or higher than the predetermined deceleration is a case where it is determined that the carrying weight is small and a braking force of sufficient magnitude with respect to the carrying weight of the motorcycle 1 is generated. In step S6, a case where it is determined that the vehicle deceleration α is smaller than the predetermined deceleration is a case where it is determined that the carrying weight is great and a braking force of sufficient magnitude with respect to the carrying weight of the motorcycle 1 is not generated.

As shown in Fig. 8, in step S6, when it is determined that the vehicle deceleration α is equal to or higher than the predetermined deceleration, the carrying weight is small and a braking force of sufficient magnitude with respect to the carrying weight of the motorcycle 1 is generated, the procedure is advanced to step S5. Thus, the magnitude of hydraulic pressure supplied to the first braking force generating mechanism 35 is maintained. Therefore, the magnitude of the current braking force of the motorcycle 1 is maintained at the reference hydraulic pressure.

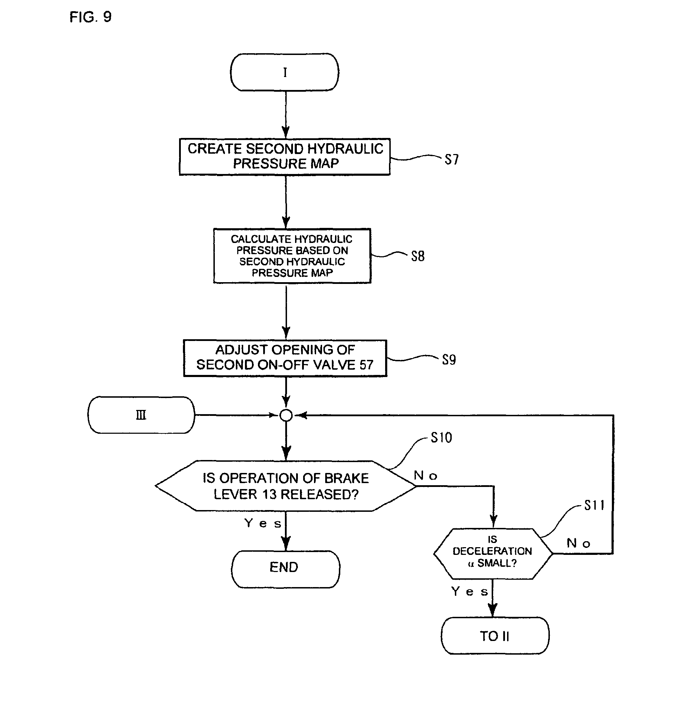

In step S6, it is determined that the vehicle deceleration α is smaller than the predetermined deceleration, the carrying weight is great and a braking force of a magnitude sufficient with respect to the carrying weight of the motorcycle 1 is not generated, the procedure is advanced to step S7 shown in Fig. 9.

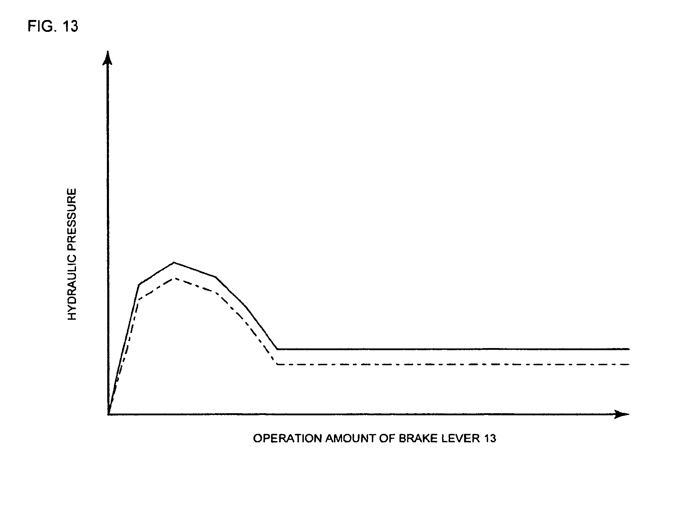

In step S7, the **CPU** 28a creates a second hydraulic pressure map. Fig. 13 shows one example of the second hydraulic pressure map. In Fig. 13, a solid line indicates the second hydraulic pressure map, and a dotted broken line indicates the first hydraulic pressure map.

More specifically, the **CPU** 28a creates the second hydraulic pressure map by adding a predetermined hydraulic pressure adjusting amount to the first hydraulic pressure map shown with the dotted broken line in Fig. 13. Here, the predetermined hydraulic pressure adjusting amount may be constant with respect to the vehicle speed of the motorcycle 1, or may be varied with respect to the vehicle speed of the motorcycle 1.

In step S8, the **CPU** 28a calculates a target hydraulic pressure by applying the current operation amount of the brake lever 13 to the second hydraulic pressure map. Then, in step S9, the **CPU** 28a adjusts the opening of the second on-off valve 57 such that hydraulic pressure supplied to the first braking force generating mechanism 35 becomes equal to hydraulic pressure calculated in step S8. As a result, hydraulic pressure based on the second hydraulic pressure map in which the predetermined hydraulic pressure adjusting amount is added is supplied to the first braking force generating mechanism 35. Thus, if it is determined in step S6 that the vehicle deceleration α is smaller than the predetermined deceleration, hydraulic pressure supplied to the first braking force generating

mechanism 35 becomes high by the predetermined hydraulic pressure adjusting amount. As a result, a braking force acting on the motorcycle 1 is increased.

After step S9, step S10 is executed. In step S10, the ECU 28 determines whether or not the operation of the brake lever 13 is released as in step S5 shown in Fig. 8. If it is determined in step S10 that the operation of the brake lever 13 is not released, the procedure is advanced to step S11.

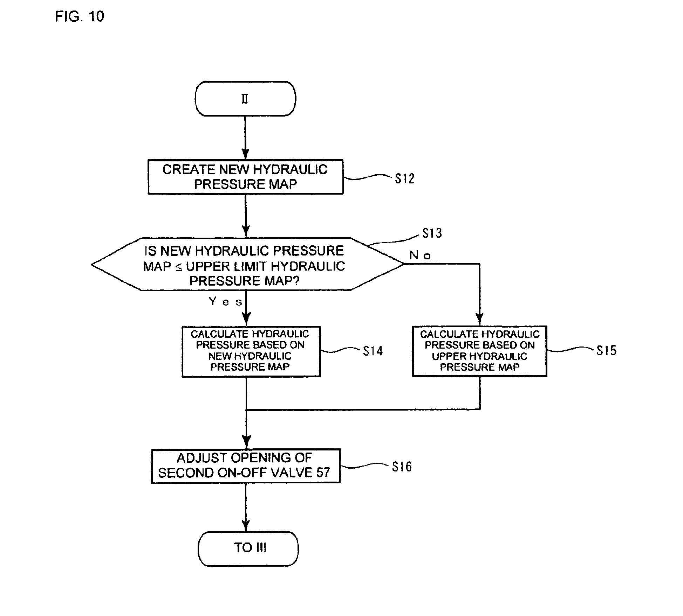

In step S11, like the above-described step S6, the **CPU** 28a determines whether or not the magnitude of the vehicle deceleration α with respect to hydraulic pressure supplied to the second braking force generating mechanism 36 is equal to or lower than a predetermined deceleration. In step S11, if it is determined that the magnitude of the vehicle deceleration α with respect to hydraulic pressure supplied to the second braking force generating mechanism 36 is greater than the predetermined deceleration, the procedure is returned to step S10. In step S11, on the other hand, if it is determined that the magnitude of the vehicle deceleration a with respect to hydraulic pressure supplied to the second braking force generating mechanism 36 is equal to or lower than the predetermined deceleration, the procedure is advanced to step S12 shown in Fig. 10.

In step S12, a new hydraulic pressure map is formed by the **CPU** 28a. More specifically, the **CPU** 28a adds a predetermined hydraulic pressure adjusting amount to the currently referred hydraulic pressure map, thereby creating a new hydraulic pressure map. The predetermined hydraulic pressure adjusting amount in step S12 may be the same as or different from the predetermined hydraulic pressure adjusting amount in step S7.

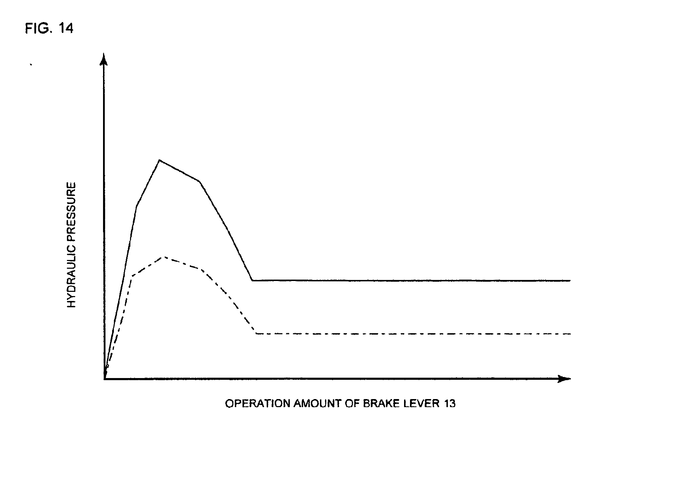

After step S12, step S13 is executed. In step S13, the CPU 28a determines whether or not hydraulic pressure defined in the new hydraulic pressure map is equal to or lower than an upper limit hydraulic pressure defined in an upper limit hydraulic pressure map. More specifically, the upper limit hydraulic pressure map is stored in the memory 28b. Fig. 14 shows one example of the upper limit hydraulic pressure map. In Fig. 14, a solid line indicates the upper limit hydraulic pressure map, and a dotted broken line indicates the first hydraulic pressure map. The **CPU** 28a reads the upper limit hydraulic pressure map. The **CPU** 28a determines whether or not hydraulic pressure calculated from the new hydraulic pressure map created in step S12 is equal to or lower than hydraulic pressure calculated from the upper limit hydraulic pressure map.

In step S13, if it is determined that hydraulic pressure calculated from the new hydraulic pressure map is equal to or lower than hydraulic pressure calculated from the upper limit hydraulic pressure map, the procedure is advanced to step S14. In step S14, a target hydraulic pressure is calculated by applying the current operation amount of the brake lever 13 to the new hydraulic pressure map created in step S12.

In step S13, if it is determined that hydraulic pressure calculated from the new hydraulic pressure map is greater than hydraulic pressure calculated from the upper limit hydraulic pressure map, the procedure is advanced to step S15. In step S15, the **CPU** 28a calculates the target hydraulic pressure by applying the current operation amount of the brake lever 13 to the upper limit hydraulic pressure map.

After steps S14 and S15, step S16 is executed. In step S16, the **CPU** 28a adjusts the opening of the second on-off valve 57 such that hydraulic pressure supplied to the first braking force generating mechanism 35 becomes equal to the target hydraulic pressure calculated in step S14 or S15.

From steps S12 to S16, if the deceleration against hydraulic pressure of the motorcycle 1 is small, hydraulic pressure supplied to the first braking force generating mechanism 35 is increased to the extent that hydraulic pressure does not exceed the upper limit hydraulic pressure.

If step S16 is completed, step S10 shown in Fig. 9 is again executed. That is, steps S11 to S16 are repeatedly executed over the time period until the operation of the brake lever 13 is released. If the brake lever 13 is again operated after the operation of the brake lever 13 is released, the procedure is carried out again from step S1. That is, the adjusting and controlling operation of hydraulic pressure is independently carried out whenever the brake lever 13 is operated.

As explained above, in this embodiment, the carrying weight of the motorcycle 1 is determined depending upon the deceleration against hydraulic pressure which is a magnitude of deceleration with respect to hydraulic pressure supplied to the second braking force generating mechanism 36. Thus, even when the front wheel 15 or the rear wheel 17 is not locked, the carrying weight of the motorcycle 1 can be determined.

The association mechanism 21 is driven by the ECU 28 in accordance with the carrying weight. More specifically, when the deceleration against hydraulic pressure is smaller than the predetermined deceleration, hydraulic pressure supplied to the first braking force generating mechanism 35 is increased. Thus, even when the front wheel 15 or the rear wheel 17 is not locked, it is possible to cause the motorcycle 1 to generate a braking force suitable for the carrying weight of the motorcycle 1.

In this embodiment, adjustment and control of hydraulic pressure in steps S6 to S16 as described above are repeatedly executed over the operation time period of the brake lever 13. Thus, it is possible to cause the motorcycle 1 to generate a braking force of a magnitude suitable for the carrying weight of the motorcycle 1 over the operation time period of the brake lever 13.

The hydraulic pressure is adjusted and controlled to the extent that hydraulic pressure supplied to the first braking force generating mechanism 35 does not exceed the predetermined upper limit hydraulic pressure. Thus, it is possible to prevent a braking force generated in the first braking force generating mechanism 35 from excessively increasing with respect to a braking force generated in the second braking force generating mechanism 36. Thus, even when the front wheel 15 or the rear wheel 17 is not locked, a braking force of a magnitude suitable for the carrying weight can be generated in the motorcycle 1, and a braking force distribution between the first braking force generating mechanism 35 and the second braking force generating mechanism 36 can be optimized.

In this embodiment, hydraulic pressure is adjusted and controlled independently whenever the brake lever 13 is operated. Thus, it is possible to prevent the rear wheel 17 from being locked.

For example, when the brake lever 13 is again operated, it is possible to refer to the hydraulic pressure map which was referred to when the brake lever 13 was operated last time. However, when the carrying weight is reduced until the brake lever 13 is operated after the brake lever 13 was operated last time, a large braking force is to be generated in the first braking force generating mechanism 35. Thus, the rear wheel 17 is prone to be locked.

According to this embodiment, on the other hand, adjustment and control of hydraulic pressure is carried out independently whenever the brake lever 13 is operated. That is, in the initial stage of operation of the brake lever 13, the first hydraulic pressure map is definitely referred to. Thus, it is possible to prevent a large braking force from being generated in the first braking force generating mechanism 35. As a result, it is possible to prevent the rear wheel 17 from being locked.

In this embodiment, the magnitude of hydraulic pressure supplied to the first braking force generating mechanism 35 is adjusted by adjusting the opening of the second on-off valve 57. For this reason, it is possible to more swiftly and precisely adjust hydraulic pressure as compared with a case where the magnitude of hydraulic pressure supplied to the first braking force generating mechanism 35 is adjusted by adjusting output of the first brake fluid pump 49.

In this embodiment, the first on-off valve 44 is the open-when-nonenergized type on-off valve and the second on-off valve 57 is the closed-when-nonenergized type on-off valve. Thus, when the association mechanism 21 is not driven, it is unnecessary to supply electric power to the first and the second on-off valves 44 and 57. It is only necessary to supply electric power to the first and the second an-off valves 44 and 57 only when the association mechanism 21 is driven. Thus, electric power consumed in the motorcycle 1 can be reduced.

## Claims

1. A braking system (30) for a motorcycle (1), including:
a first hydraulic pressure supply mechanism (40a) which supplies hydraulic pressure;
a first braking force generating mechanism (35) which generates a braking force when hydraulic pressure is supplied from the first hydraulic pressure supply mechanism (40a);
a first operation member (18) for operating the first hydraulic pressure supply mechanism (40a);
a second hydraulic pressure supply mechanism (40b) which supplies hydraulic pressure;
a second braking force generating mechanism (36) which generates a braking force when hydraulic pressure is supplied from the second hydraulic pressure supply mechanism (40b);
a second operation member (13) for operating the second hydraulic pressure supply mechanism (40b);
an operation amount detection section which detects an operation amount of the second operation member (13);
an association mechanism (21) which supplies hydraulic pressure to the first braking force generating mechanism (35) when the second operation member (13) is operated;
a vehicle speed detection sensor (27) which detects a vehicle speed of the
motorcycle (1), and
a control unit (28) which controls the association mechanism (21),
the braking system being **characterized in that**
the control unit (28) calculates vehicle deceleration from the vehicle speed detected by the vehicle speed sensor (27), and when the vehicle deceleration with respect to hydraulic pressure supplied to the second braking force generating mechanism (36) is smaller than a predetermined deceleration as defined in a deceleration map, the control unit (28) adjusts and controls hydraulic pressure such that hydraulic
pressure supplied to the first braking force generating mechanism (35) by the association mechanism (21) is increased.

2. A braking system/for a motorcycle according to claim 1, **characterized in that** the control unit (28) repeatedly adjusts and controls hydraulic pressure.

3. A braking system (30) for a motorcycle according to claim 1 or 2, **characterized in that** the control unit (28) adjusts and controls hydraulic pressure to the extent that hydraulic pressure supplied to the first braking force generating mechanism (35) does not exceed a predetermined hydraulic pressure.

4. A braking system (30) for a motorcycle according to any one of claims 1 to 3, comprising a hydraulic pressure sensor (61) which detects hydraulic
pressure supplied to the second braking force generating mechanism (36) in the operation amount detection section which detects an operation amount of the second operation member (13), the braking system being **characterized in that** the control unit (28) includes:
a storing section (28b) which stores therein a first hydraulic pressure map that defines a relation between the operation amount of the second operation member (13) and a reference hydraulic pressure supplied to the first braking force generating mechanism (35); and
a calculating section (28a), which
when a magnitude of the vehicle deceleration with respect to hydraulic pressure supplied to the second braking force generating mechanism (36) is equal to or
greater than the predetermined deceleration, controls the association mechanism (21) such that hydraulic pressure supplied to the first braking force generating mechanism (35) by the association mechanism becomes equal to the reference hydraulic pressure which is calculated based on the first hydraulic pressure map
and the operation amount of the second operation member (13) detected by the operation amount detection section (61), and
when the magnitude of the vehicle deceleration, with respect to hydraulic pressure supplied to the second braking force generating mechanism (36) is smaller than the predetermined deceleration, controls the association mechanism (21) such that hydraulic pressure supplied to the first braking force generating
mechanism (35) by the association mechanism (21) becomes higher than a current hydraulic pressure supplied to the first braking force generating mechanism (35)
by the association mechanism (21) by a predetermined hydraulic pressure adjusting amount.

5. A braking system (30) for a motorcycle according to claim 4, **characterized in that** if a magnitude of the vehicle deceleration with respect to hydraulic pressure supplied to the second braking force generating mechanism (36) becomes smaller than the predetermined deceleration during a time period in which the first braking force generating mechanism (35) is controlled such that hydraulic pressure supplied to the first braking force generating mechanism (35) by the association mechanism (21) becomes equal to a reference hydraulic pressure calculated from the first hydraulic pressure map and from the operation amount of the second operation member (13) detected by the operation amount detection section (61), the calculating section (28a) controls the association mechanism (21) such that hydraulic pressure supplied to the first braking force generating mechanism (35)
by the association mechanism (21) becomes equal to hydraulic pressure calculated from the vehicle speed of the motorcycle and from a second hydraulic pressure map in which the predetermined hydraulic pressure adjusting amount is added to the reference hydraulic pressure defined in the first hydraulic pressure map.

6. A braking system (30) for a motorcycle according to claim 5, **characterized in that** when a magnitude of the vehicle deceleration with respect to hydraulic pressure supplied to the second braking force generating mechanism (36) becomes smaller than the predetermined deceleration, the calculating section (28a) controls the association mechanism (21) such that hydraulic pressure supplied to the first braking force generating mechanism (35) by the association mechanism (21) becomes equal to hydraulic pressure calculated from the vehicle speed of the motorcycle and from a new hydraulic pressure map in which the predetermined hydraulic pressure adjusting amount is added to a currently referred hydraulic pressure map.

7. A braking system (30) for a motorcycle according to claim 6, **characterized in that** the storing section (28b) stores therein an upper limit hydraulic pressure map that
defines a relation between the operation amount of the second operation member (13) and an upper limit hydraulic pressure supplied to the first braking force generating mechanism (35), and
when hydraulic pressure defined in the new hydraulic pressure map is higher than hydraulic pressure defined in the upper limit hydraulic pressure map, the calculating section (28a) controls the association mechanism (21) such that hydraulic pressure supplied to the first braking force generating mechanism (35) by the association mechanism (21) becomes equal to the upper limit hydraulic pressure calculated from the upper limit hydraulic pressure map and from the operation amount of the second operation member (13) detected by the operation amount detection section (61).

8. A braking system (30) for a motorcycle according to any one of claims 5 to 7, **characterized in that**
if a magnitude of the vehicle deceleration with respect to hydraulic pressure supplied to the second braking force generating mechanism (36) becomes smaller than the predetermined deceleration after operation of the second operation member(13) is released and then the second operation member (13) is again operated, the control unit (28) controls the association mechanism (21) such that hydraulic pressure supplied to the first braking force generating mechanism (35) by the association mechanism (21) becomes equal to the reference hydraulic pressure calculated from the first hydraulic pressure map and from the operation
amount of the second operation member (13) detected by the operation amount detection section (61).

9. A braking system (30) for a motorcycle according to any one of claims 1 to 8, **characterized by a** first brake fluid passage (42) which connects the first hydraulic pressure supply mechanism (40a) and the first braking force generating mechanism (35) to each other, wherein the association mechanism (21) includes:
a first on-off valve (44) which is disposed in the first brake fluid passage (42) to
open and close the first brake fluid passage (42);
an association mechanism brake fluid passage (47) which connects a portion (8) of the first brake fluid passage (42) closer to the first hydraulic pressure supply
mechanism (40a) than the first on-off valve (44) and a portion (C) of the first brake fluid passage (42) closer to the first braking force generating mechanism (35);
abrake fluid pump (49) which is disposed in the association mechanism brake fluid passage (47) to send brake fluid from the first braking force generating mechanism (35) toward the first hydraulic pressure supply mechanism (40a) or to send brake fluid from the first hydraulic pressure supply mechanism (40a) toward the first braking force generating mechanism (35); and
a second on-off valve (57) which is disposed in the association mechanism brake fluid passage (47) to open and close the association mechanism brake fluid passage (47).

10. A braking system (30) for a motorcycle according to claim 9, **characterized in that** the control unit (28) adjusts and controls hydraulic pressure by adjusting an opening of the second on-off valve (57).

11. A braking system (30) for a motorcycle according to claim 9 or 10, **characterized in that**
the first on-off valve (44) is opened when electric power is not supplied and is closed when electric power is supplied, and
the second on-off valve (57) is closed when electric power is not supplied and is opened when electric power is supplied.

12. A motorcycle (1) including a front wheel (15) and a rear wheel (17) and braking system (30) according to any one of claims 1 to 11, wherein the vehicle speed sensor (27) includes:
a front wheel rotation speed sensor (27a) which detects a rotation speed of the front wheel (15); and
a rear wheel rotation speed sensor (27b) which detects a rotation speed of the rear wheel (17).

13. A motorcycle (1) according to claim 12,
wherein the first braking force generating mechanism (35) is provided to the rear wheel (17), and
the second braking force generating mechanism (36) is provided to the front wheel (15).

## Patentansprüche

1. Bremssystem (30) für ein Motorrad (1), enthaltend:
eine erste Hydraulikdruck- Zuführungsvorrichtung (40a), die einen Hydraulikdruck zuführt;
eine erste Bremskraft- Erzeugungsvorrichtung (35), die eine Bremskraft erzeugt,
wenn von der ersten Hydraulikdruck- Zuführungsvorrichtung (40a) ein Hydraulikdruck zugeführt wird;
ein erstes Betätigungsteil (18) zum Betätigen der ersten Hydraulikdruck- Zuführungsvorrichtung (40a);
eine zweite Hydraulikdruck- Zuführungsvorrichtung (40b), die Hydraulikdruck zuführt;
eine zweite Bremskraft- Erzeugungsvorrichtung (36), die eine Bremskraft erzeugt,
wenn von der zweiten Hydraulikdruck- Zuführungsvorrichtung (40b) ein Hydraulikdruck zugeführt wird;
ein zweites Betätigungsteil (13) zum Betätigen der zweiten Hydraulikdruck- Zuführungsvorrichtung (40b);
einen Betätigungsgröße- Erfassungsabschnitt, der eine Betätigungsgröße des zweiten Betätigungsteils (13) erfasst;
eine Verbundvorrichtung (21), die den Hydraulikdruck zu der ersten Bremskraft-Erzeugungsvorrichtung (35) zuführt, wenn das zweite Betätigungsteil (13) betätigt wird;
einen Fahrzeuggeschwindigkeits- Erfassungssensor (27), der eine Fahrzeuggeschwindigkeit des Motorrades (1) erfasst; und
eine Steuerungseinheit (28), die die Verbundvorrichtung (21) steuert,
wobei das Bremssystem **dadurch gekennzeichnet ist, dass** die Steuerungseinheit (28) die Fahrzeugabbremsung aus der Fahrzeuggeschwindigkeit, erfasst durch den Fahrzeuggeschwindigkeits- Erfassungssensor (27), errechnet und wenn die Fahrzeugabbremsung in Bezug auf den Hydraulikdruck,
zugeführt zu der zweiten Bremskraft- Erzeugungsvorrichtung (36), kleiner als eine vorbestimmte Abbremsung, wie in einem Abbremsungsplan definiert, ist, die Steuerungseinheit (28) den Hydraulikdruck derart einstellt und steuert, dass der Hydraulikdruck, zugeführt zu der ersten Bremskraft- Erzeugungsvorrichtung (35),
durch die Verbundvorrichtung (21) erhöht wird.

2. Bremssystem (30) für ein Motorrad (1) nach Anspruch 1, **dadurch gekennzeichnet, dass** die Steuerungseinheit (28) wiederholt den Hydraulikdruck einstellt und steuert.

3. Bremssystem (30) für ein Motorrad (1) nach Anspruch 1 oder 2, **dadurch gekennzeichnet, dass** die Steuerungseinheit (28) den Hydraulikdruck bis zu dem Maß einstellt und steuert, dass der Hydraulikdruck, zugeführt zu der ersten Bremskraft- Erzeugungsvorrichtung (35) einen voreingestellten Hydraulikdruck nicht übersteigt.

4. Bremssystem (30) für ein Motorrad (1) nach einem der Ansprüche 1 bis 3, aufweisend einen Hydraulikdrucksensor (61), der den Hydraulikdruck erfasst, zugeführt zu der zweiten Bremskraft- Erzeugungsvorrichtung (36) in dem Betätigungsgröße-Erfassungsabschnitt, der eine Betätigungsgröße des zweiten Betätigungsteils (13) erfasst, wobei das Bremssystem **gekennzeichnet ist dadurch, dass** die Steuerungseinheit (28) enthält:
einen Speicherabschnitt (28b), der darin einen ersten Hydraulikdruck- Plan speichert, der eine Beziehung zwischen der Betätigungsgröße des zweiten Betätigungsteils (13) und einem Referenz- Hydraulikdruck, zugeführt zu der ersten Bremskraft- Erzeugungsvorrichtung (35), definiert; und
einen Berechnungsabschnitt (28a), der
wenn eine Größe der Fahrzeugbeschleunigung in Bezug auf den Hydraulikdruck,
zugeführt zu der zweiten Bremskraft- Erzeugungsvorrichtung (36), gleich zu oder
größer als die vorbestimmte Beschleunigung ist, die Verbundvorrichtung (21) derart steuert, dass der Hydraulikdruck, zugeführt zu der ersten Bremskraft- Erzeugungsvorrichtung (35) **durch** die Verbundvorrichtung, zu dem Referenz- Hydraulikdruck gleich wird, der auf der Grundlage des ersten Hydraulikdruck- Plans und
der Betätigungsgröße des zweiten Betätigungsteiles, erfasst **durch** den Betätigungsgröße- Erfassungsabschnitt (61), berechnet wird, und
wenn die Größe der Fahrzeugbeschleunigung in Bezug auf den Hydraulikdruck,
zugeführt zu der zweiten Bremskraft- Erzeugungsvorrichtung (36) kleiner als die vorbestimmte Abbremsung ist, die Verbundvorrichtung (21) derart steuert, dass der Hydraulikdruck, zugeführt zu der ersten Bremskraft- Erzeugungsvorrichtung (35) **durch** die Verbundvorrichtung (21), **durch** die Verbundvorrichtung (21) um eine vorbestimmte Hydraulikdruck- Einstellgröße höher wird als ein momentaner Hydraulikdruck, zugeführt zu der ersten Bremskraft- Erzeugungsvorrichtung (35).

5. Bremssystem (30) für ein Motorrad (1) nach Anspruch 4, **dadurch gekennzeichnet, dass** wenn eine Größe der Fahrzeugabbremsung in Bezug auf den Hydraulikdruck, zugeführt zu der zweiten Bremskraft- Erzeugungsvorrichtung (36), kleiner als die vorbestimmte Abbremsung während einer Zeitdauer wird, in der die erste Bremskraft- Erzeugungsvorrichtung (35) derart gesteuert wird, dass der Hydraulikdruck, zugeführt zu der ersten Bremskraft- Erzeugungsvorrichtung (35) durch die Verbundvorrichtung (21), gleich wird zu einem Referenz- Hydraulikdruck, berechnet aus dem ersten Hydraulikdruck- Plan und aus der Betätigungsgröße des zweiten Betätigungsteils (13), erfasst durch den Betätigungsgröße- Erfassungsabschnitt (61), wobei der Berechnungsabschnitt (28a) die Verbundvorrichtung (21) derart steuert, dass der Hydraulikdruck, zugeführt zu der ersten Bremskraft- Erzeugungsvorrichtung (35) durch die Verbundvorrichtung (21), gleich wird zu dem Hydraulikdruck, berechnet aus der Fahrzeuggeschwindigkeit des Motorrades und aus dem zweiten Hydraulikdruck- Plan, in dem die vorbestimmte Hydraulikdruck- Einstellgröße zu dem Referenz- Hydraulikdruck, definiert in dem ersten Hydraulikdruck- Plan, addiert ist.

6. Bremssystem (30) für ein Motorrad (1) nach Anspruch 5, **dadurch gekennzeichnet, dass** wenn eine Größe der Fahrzeugabbremsung in Bezug auf den Hydraulikdruck, zugeführt zu der zweiten Bremskraft- Erzeugungsvorrichtung (36), kleiner als die vorbestimmte Abbremsung wird, der Berechnungsabschnitt (28a) die Verbundvorrichtung (21) derart steuert, dass der Hydraulikdruck, zugeführt zu der ersten Bremskraft- Erzeugungsvorrichtung (35) durch die Verbundvorrichtung (21), gleich wird zu dem Hydraulikdruck, berechnet aus der Fahrzeuggeschwindigkeit des Motorrades und aus einem neuen Hydraulikdruck- Plan, in dem die vorbestimmte Hydraulikdruck- Einstellgröße zu dem momentan bezogenen Hydraulikdruck addiert ist.

7. Bremssystem (30) für ein Motorrad (1) nach Anspruch 6, **dadurch gekennzeichnet, dass** der Speicherabschnitt (28b) darin einen Obergrenzen- Hydraulikdruck-Plan speichert, der eine Beziehung zwischen der Betätigungsgröße des zweiten Betätigungsteils (13) und einem Obergrenzen- Hydraulikdruck, zugeführt zu der ersten Bremskraft- Erzeugungsvorrichtung (35), definiert, und
wenn der Hydraulikdruck, definiert in dem neuen Hydraulikdruck- Plan höher ist als der Hydraulikdruck, definiert in dem Obergrenzen- Hydraulikdruck- Plan, der Berechnungsabschnitt (28a) die Verbundvorrichtung (21) derart steuert, dass der Hydraulikdruck, zugeführt zu der ersten Bremskraft- Erzeugungsvorrichtung (35) durch die Verbundvorrichtung (21), gleich wird zu dem Obergrenzen- Hydraulikdruck, berechnet aus dem Obergrenzen- Hydraulikdruck- Plan und aus der Betätigungsgröße des zweiten Betätigungsteils (13), erfasst durch den Betätigungsgröße- Erfassungsabschnitt (61).

8. Bremssystem (30) für ein Motorrad (1) nach einem der Ansprüche 5 bis 7, **dadurch gekennzeichnet, dass**
wenn eine Größe der Fahrzeugabbremsung in Bezug auf den Hydraulikdruck, zugeführt zu der zweiten Bremskraft- Erzeugungsvorrichtung (36), kleiner wird als die vorbestimmte Abbremsung nachdem die Betätigung des zweiten Betätigungsteils (13) aufgehoben ist und dann das zweite Betätigungsteil (13) wieder betätigt wird, die Steuerungseinheit (28) die Verbundvorrichtung (21) derart steuert, dass der Hydraulikdruck, zugeführt zu der ersten Bremskraft- Erzeugungsvorrichtung (35) durch die Verbundvorrichtung (21), gleich wird zu dem Referenz- Hydraulikdruck, berechnet aus dem ersten Hydraulikdruck- Plan und aus der Betätigungsgröße des zweiten Betätigungsteils (13), erfasst durch den Betätigungsgröße- Erfassungsabschnitt (61).

9. Bremssystem (30) für ein Motorrad (1) nach einem der Ansprüche 1 bis 8, **gekennzeichnet durch** einen ersten Bremsfluidkanal (42), der die erste Hydraulikdruck- Zuführungsvorrichtung (40a) und die erste Bremskraft- Erzeugungsvorrichtung (35) miteinander verbindet, wobei die Verbundvorrichtung (21) enthält:
ein erstes Ein- Aus- Ventil (44), das in dem ersten Bremsfluidkanal (42) angeordnet ist, um den ersten Bremsfluidkanal (42) zu öffnen oder zu schließen;
einen Verbundvorrichtung- Bremsfluidkanal (47), der einen Abschnitt (13) des ersten Bremsfluidkanals (42) näher zu der ersten Bremskraft- Erzeugungsvorrichtung (35) als das erste Ein- Aus- Ventil (44) und einen Abschnitt (C) des ersten Bremsfluidkanals (42) näher zu der ersten Bremskraft- Erzeugungsvorrichtung (35) verbindet;
eine Bremsfluidpumpe (49), die in dem Verbundvorrichtung- Bremsfluidkanal (47) angeordnet ist, um ein Bremsfluid aus der Bremskraft- Erzeugungsvorrichtung (35) in Richtung zu der ersten Hydraulikdruck- Zuführungsvorrichtung (40a) zu senden oder ein Bremsfluid aus der ersten Hydraulikdruck- Zuführungsvorrichtung (40a) in Richtung zu der ersten Bremskraft- Erzeugungsvorrichtung (35) zu senden; und
ein zweites Ein- Aus- Ventil (57), das in dem Verbundvorrichtung- Bremsfluidkanal (47) angeordnet ist, um den Verbundvorrichtung- Bremsfluidkanal (47) zu öffnen oder zu schließen.

10. Bremssystem (30) für ein Motorrad (1) nach Anspruch 9, **dadurch gekennzeichnet, dass** die Steuerungseinheit (28) den Hydraulikdruck durch Einstellen einer Öffnung des zweiten Ein- Aus- Ventils (57) einstellt und steuert.

11. Bremssystem (30) für ein Motorrad (1) nach Anspruch 9 oder 10, **dadurch gekennzeichnet, dass** das erste Ein- Aus- Ventil (44) geöffnet ist, wenn keine Elektroenergie zugeführt wird und geschlossen ist, wenn Elektroenergie zugeführt wird und
das zweite Ein- Aus- Ventil (57) geschlossen ist, wenn keine Elektroenergie zugeführt wird und geöffnet ist, wenn Elektroenergie zugeführt wird.

12. Motorrad (1), enthaltend ein Vorderrad (15) und ein Hinterrad (17) und ein Bremssystem (30) nach einem der Ansprüche 1 bis 11, wobei der Fahrzeuggeschwindigkeitssensor (27) enthält:
einen Vorderrad- Drehzahlsensor (27a), der eine Drehzahl des Vorderrades (15) erfasst; und
einen Hinterrad- Drehzahlsensor (27b), der eine Drehzahl des Hinterrades (17) erfasst.

13. Motorrad (1) nach Anspruch 12,
wobei die erste Bremskraft- Erzeugungsvorrichtung (35) an dem Hinterrad (17) vorgesehen ist und
die zweite Bremskraft- Erzeugungsvorrichtung (36) an dem Vorderrad (15) vorgesehen ist.

## Revendications

1. Système de freinage (30) pour motocyclette (1), comprenant :
un premier mécanisme d'alimentation de pression hydraulique (40a) qui fournit une pression hydraulique ;
un premier mécanisme de génération de force de freinage (35) qui génère une force de freinage quand une pression hydraulique est fournie par le premier mécanisme d'alimentation de pression hydraulique (40a) ;
un premier élément d'actionnement (18) pour actionner le premier mécanisme d'alimentation de pression hydraulique (40a) ;
un deuxième mécanisme d'alimentation de pression hydraulique (40b) qui fournit une pression hydraulique ;
un deuxième mécanisme de génération de force de freinage (36) qui génère une force de freinage lorsqu'une pression hydraulique est fournie par le deuxième mécanisme d'alimentation de pression hydraulique (40b) ;
un deuxième élément d'actionnement (13) pour actionner le deuxième mécanisme d'alimentation de pression hydraulique (40b) ;
une section de détection de quantité d'actionnement qui détecte une quantité d'actionnement du deuxième élément d'actionnement (13) ;
un mécanisme d'association (21) qui fournit une pression hydraulique au premier mécanisme de génération de force de freinage (35) lorsque le deuxième élément d'actionnement (13) est actionné ;
un capteur de détection de vitesse du véhicule (27) qui détecte une vitesse de véhicule de la motocyclette (1), et
une unité de contrôle (28) qui contrôle le mécanisme d'association (21),
le système de freinage étant **caractérisé en ce que**
l'unité de contrôle (28) calcule la décélération du véhicule à partir de la vitesse de véhicule détectée par le capteur de vitesse du véhicule (27), et lorsque la décélération du véhicule par rapport à la pression hydraulique fournie au deuxième mécanisme de génération de force de freinage (36) est inférieure à une décélération prédéterminée telle que définie dans la table de décélération, l'unité de contrôle (28) ajuste et contrôle la pression hydraulique de telle sorte que la pression hydraulique fournie au premier mécanisme de génération de force de freinage (35) par le mécanisme d'association (21) est augmentée.

2. Système de freinage (30) pour motocyclette selon la revendication 1, **caractérisé en ce que** l'unité de contrôle (28) ajuste et contrôle la pression hydraulique de manière répétée.

3. Système de freinage (30) pour motocyclette selon la revendication 1 ou 2, **caractérisé en ce que** l'unité de contrôle (28) ajuste et contrôle la pression hydraulique dans la mesure où la pression hydraulique fournie au premier mécanisme de génération de force de freinage (35) ne dépasse pas une pression hydraulique prédéterminée.

4. Système de freinage (30) pour motocyclette selon l'une quelconque des revendications 1 à 3, comprenant un capteur de pression hydraulique (61) qui détecte la pression hydraulique fournie au deuxième mécanisme de génération de force de freinage (36) dans la section de détection de quantité d'actionnement qui détecte une quantité d'actionnement du deuxième élément d'actionnement (13), le système de freinage étant **caractérisé en ce que** l'unité de contrôle (28) comprend :
une section de stockage (28b) qui stocke une première table de pression hydraulique qui définit une relation entre la quantité d'actionnement du deuxième élément d'actionnement (13) et une pression hydraulique de référence fournie au premier mécanisme de génération de force de freinage (35) ; et
une section de calcul (28a), qui
lorsqu'une grandeur de décélération du véhicule par rapport à la pression hydraulique fournie au deuxième mécanisme de génération de force de freinage (36) est supérieure ou égale à la décélération prédéterminée, contrôle le mécanisme d'association (21) de telle sorte que la pression hydraulique fournie au premier mécanisme de génération de force de freinage (35) par le mécanisme d'association devient égale à la pression hydraulique de référence qui est calculée à partir de la première table de pression hydraulique et de la quantité d'actionnement du deuxième élément d'actionnement (13) détectée par la section de détection de quantité d'actionnement (61), et
lorsque la grandeur de décélération du véhicule par rapport à la pression hydraulique fournie au deuxième mécanisme de génération de force de freinage (36) est inférieure à la décélération prédéterminée, contrôle le mécanisme d'association (21) de telle sorte que la pression hydraulique fournie au premier mécanisme de génération de force de freinage (35) par le mécanisme d'association (21) devient supérieure à une pression hydraulique actuelle fournie au premier mécanisme de génération de force de freinage (35) par le mécanisme d'association (21) à concurrence d'une quantité d'ajustement de pression hydraulique prédéterminée.

5. Système de freinage (30) pour motocyclette selon la revendication 4, **caractérisé en ce que** si une grandeur de décélération du véhicule par rapport à la pression hydraulique fournie au deuxième mécanisme de génération de force de freinage (36) devient inférieure à la décélération prédéterminée durant une période où le premier mécanisme de génération de force de freinage (35) est contrôlé de telle sorte que la pression hydraulique fournie au premier mécanisme de génération de force de freinage (35) par le mécanisme d'association (21) devient égale à une pression hydraulique de référence calculée à partir de la première table de pression hydraulique et de la quantité d'actionnement du deuxième élément d'actionnement (13) détectée par la section de détection de quantité d'actionnement (61), la section de calcul (28a) contrôle le mécanisme d'association (21) de telle sorte que la pression hydraulique fournie au premier mécanisme de génération de force de freinage (35) par le mécanisme d'association (21) devient égale à la pression hydraulique calculée à partir de la vitesse de véhicule de la motocyclette et d'une deuxième table de pression hydraulique dans laquelle la quantité d'ajustement de la pression hydraulique prédéterminée est ajoutée à la pression hydraulique de référence définie dans la première table de pression hydraulique.

6. Système de freinage (30) pour motocyclette selon la revendication 5, **caractérisé en ce que** lorsqu'une grandeur de décélération du véhicule par rapport à la pression hydraulique fournie au deuxième mécanisme de génération de force de freinage (36) devient inférieure à la décélération prédéterminée, la section de calcul (28a) contrôle le mécanisme d'association (21) de telle sorte que la pression hydraulique fournie au premier mécanisme de génération de force de freinage (35) par le mécanisme d'association (21) devient égale à la pression hydraulique calculée à partir de la vitesse de véhicule de la motocyclette et d'une nouvelle table de pression hydraulique dans laquelle la quantité d'ajustement de la pression hydraulique prédéterminée est ajoutée à une table de pression hydraulique actuellement de référence.

7. Système de freinage (30) pour motocyclette selon la revendication 6, **caractérisé en ce que** la section de stockage (28b) stocke une table de pression hydraulique de limite supérieure qui définit une relation entre la quantité d'actionnement du deuxième élément d'actionnement (13) et une pression hydraulique de limite supérieure fournie au premier mécanisme de génération de force de freinage (35), et
lorsque la pression hydraulique définie dans la nouvelle table de pression hydraulique est supérieure à la pression hydraulique définie dans la table de pression hydraulique de limite supérieure, la section de calcul (28a) contrôle le mécanisme d'association (21) de telle sorte que la pression hydraulique fournie au premier mécanisme de génération de force de freinage (35) par le mécanisme d'association (21) devient égale à la pression hydraulique de limite supérieure calculée à partir de la table de pression hydraulique de limite supérieure et de la quantité d'actionnement du deuxième élément d'actionnement (13) détectée par la section de détection de quantité d'actionnement (61).

8. Système de freinage (30) pour motocyclette selon l'une quelconque des revendications 5 à 7, **caractérisé en ce que**
si une grandeur de décélération du véhicule par rapport à la pression hydraulique fournie au deuxième mécanisme de génération de force de freinage (36) devient inférieure à la décélération prédéterminée après que l'actionnement du deuxième élément d'actionnement (13) est libéré et qu'ensuite le deuxième élément d'actionnement (13) est actionné de nouveau, l'unité de contrôle (28) contrôle le mécanisme d'association (21) de telle sorte que la pression hydraulique fournie au premier mécanisme de génération de force de freinage (35) par le mécanisme d'association (21) devient égale à la pression hydraulique de référence calculée à partir de la première table de pression hydraulique et de la quantité d'actionnement du deuxième élément d'actionnement (13) détectée par la section de détection de quantité d'actionnement (61).

9. Système de freinage (30) pour motocyclette selon l'une quelconque des revendications 1 à 8, **caractérisé par** un premier passage de fluide de frein (42) qui connecte entre eux le premier mécanisme d'alimentation de pression hydraulique (40a) et le premier mécanisme de génération de force de freinage (35), dans lequel le mécanisme d'association (21) comprend :
une première vanne marche-arrêt (44) qui est agencée dans le premier passage de fluide de frein (42) pour ouvrir et fermer le premier passage de fluide de frein (42) ;
un passage de fluide de frein de mécanisme d'association (47) qui connecte une partie (B) du premier passage de fluide de frein (42) plus proche du premier mécanisme d'alimentation de pression hydraulique (40a) que la première vanne marche-arrêt (44), et une partie (C) du premier passage de fluide de frein (42) plus proche du premier mécanisme de génération de force de freinage (35) ;
une pompe de fluide de frein (49) qui est agencée dans le passage de fluide de frein du mécanisme d'association (47) pour envoyer du fluide de frein depuis le premier mécanisme de génération de force de freinage (35) vers le premier mécanisme d'alimentation de pression hydraulique (40a) ou pour envoyer du fluide de frein depuis le premier mécanisme d'alimentation de pression hydraulique (40a) vers le premier mécanisme de génération de force de freinage (35) ; et
une deuxième vanne marche-arrêt (57) qui est agencée dans le passage de fluide de frein du mécanisme d'association (47) pour ouvrir et fermer le passage de fluide de frein du mécanisme d'association (47).

10. Système de freinage (30) pour motocyclette selon la revendication 9, **caractérisé en ce que** l'unité de contrôle (28) ajuste et contrôle la pression hydraulique en ajustant une ouverture de la deuxième vanne marche-arrêt (57).

11. Système de freinage (30) pour motocyclette selon la revendication 9 ou 10, **caractérisé en ce que**
la première vanne marche-arrêt (44) est ouverte quand aucune alimentation électrique n'est fournie et est fermée quand une alimentation électrique est fournie, et
la deuxième vanne marche-arrêt (57) est fermée quand aucune alimentation électrique n'est fournie et est ouverte quand une alimentation électrique est fournie.

12. Motocyclette (1) comprenant une roue avant (15) et une roue arrière (17) ainsi qu'un système de freinage (30) selon l'une quelconque des revendications 1 à 11, dans laquelle le capteur de vitesse du véhicule (27) comprend :
un capteur de vitesse de rotation de la roue avant (27a) qui détecte une vitesse de rotation de la roue avant (15) ; et
un capteur de vitesse de rotation de la roue arrière (27b) qui détecte une vitesse de rotation de la roue arrière (17).

13. Motocyclette (1) selon la revendication 12, dans laquelle le premier mécanisme de génération de force de freinage (35) est fourni sur la roue arrière (17) ; et
le deuxième mécanisme de génération de force de freinage (36) est fourni sur la roue avant (15).
